Europäisches Patentamt

European Patent Office

Office européen des brevets

(11) Numéro de publication: **0 090 740**
**A1**

## (12) DEMANDE DE BREVET EUROPEEN

(21) Numéro de dépôt: 83400648.8

(22) Date de dépôt: 29.03.83

(51) Int. Cl.³: **F 02 B 5/00,** B 60 Q 9/00

(30) Priorité: 30.03.82 FR 8205396

(43) Date de publication de la demande: 05.10.83
Bulletin 83/40

(84) Etats contractants désignés: DE FR GB IT

(71) Demandeur: **REGIE NATIONALE DES USINES
RENAULT, Boîte postale 103 8-10 avenue Emile Zola,
F-92109 Boulogne-Billancourt (FR)**

(72) Inventeur: **Brepson, Jean-Marc, 28, avenue Pasteur,
F-94250 Gentilly (FR)**

(74) Mandataire: **Colas, Jean-Pierre et al, Regie Nationale
des Usines RENAULT (S.0804), F-92109 Boulogne
Billancourt Cedex (FR)**

(54) Calculateur d'avance à l'allumage et/ou d'injection de carburant à fonction économétrique pour véhicule automobile.

(57) Ce calculateur comprend des moyens (49, 50) de mesure de la vitesse du moteur, des moyens (56, 57, 61) de mesure de sa charge, une mémoire morte (53) de cœfficients d'avance et/ou de temps d'injection adressable en fonction de la vitesse et de la charge, des moyens d'adressage de la mémoire morte (53) à partir des moyens de mesure (49, 50, 56, 57, 61), et des moyens (62, 74) de calcul de l'avance à l'allumage et/ou du temps d'injection à partir des coefficients lus dans la mémoire morte (53). Il comprend en outre au moins un organe (134, 135, 144, 146) avertisseur du mode instantané de fonctionnement du moteur et un circuit logique (132, 133; 137-143) d'excitation de l'organe avertisseur commandé, à partir de la mémoire morte (53), par au moins un chiffre binaire représentatif du caractère économique ou non économique du fonctionnement emmagasiné à chaque emplacement contenant un coefficient de la mémoire morte (53).

Application aux véhicules automobiles.

ACTORUM AG

Calculateur d'avance à l'allumage et/ou d'injection de carburant à fonction économétrique pour véhicule automobile.

La présente invention concerne un calculateur d'avance à l'allumage et/ou d'injection de carburant pour moteur à combustion interne de véhicule automobile, du type comportant des moyens de mesure de la vitesse du moteur, des moyens de mesure de sa charge, au moins une mémoire morte de coefficients d'avance et/ou de temps d'injection adressable en fonction de la vitesse et/de la charge, des moyens d'adressage de la mémoire morte à partir des moyens de mesure, et des moyens de calcul de l'avance à l'allumage et/ou du temps d'injection à partir des coefficients lus dans la mémoire morte. Un tel calculateur pour le calcul de l'avance à l'allumage est notamment décrit dans la demande de brevet français 2.485.641.

L'invention vise à réaliser un calculateur de ce type qui assure, outre sa fonction première de calcul de l'avance à l'allumage et/ou de la durée d'injection,une fonction économétrique, c'est-à-dire donne une indication sur le caractére économique ou non économique du fonctionnement du moteur à chaque instant, et ceci sans modification fondamentale du calculateur.

A cet effet, l'invention a pour objet un calculateur du type précité qui comprend au moins un organe avertisseur du mode instantané de fonctionnement du moteur et un circuit logique d'excitation de l'organe avertisseur commandé, à partir de la mémoire morte, par au moins un chiffre binaire représentatif du caractère économique ou non économique/du fonctionnement emmagasiné à chaque emplacement contenant un coefficient de la mémoire morte.

Suivant un premier mode de réalisation, le calculateur comprend deux organes avertisseurs excités sélectivement par le circuit logique en fonction de la valeur du chiffre binaire appliquée à ce dernier. Dans ce cas, le circuit logique comprend une bascule dont la sortie est connectée directement à l'un des organes avertisseurs et par l'intermédiaire d'un inverseur à l'autre organe avertisseur.

Suivant un second mode de réalisation, le calculateur comprend trois organes avertisseurs excités sélectivement par le circuit logique en fonction de la valeur de chacun de deux chiffres binaires emmagasinés à chaque emplacement contenant un coefficient de la mémoire morte. Le circuit logique comprend alors deux bascules recevant chacune l'un desdits chiffres binaires de la mémoire morte à leur entrée et dont les sorties sont connectées aux trois organes avertisseurs par l'intermédiaire de trois portes NOR respectivement, l'une des portes NOR étant reliée directement aux bascules, une autre des portes NOR étant reliée directement à une première des bascules et par l'intermédiaire d'un inverseur à la seconde bascule, et la troisième porte NOR étant reliée directement à la seconde bascule et par l'intermédiaire d'un inverseur à la première bascule.

De préférence, chaque bascule est une bascule D qui reçoit sur l'une de ses entrées le chiffre binaire et sur son autre entrée un signal de synchronisation de point mort haut et de point mort bas du moteur.

D'autres caractéristiques et avantages de l'invention ressortiront de la description qui va suivre de deux modes de sa réalisation donnés uniquement à titre d'exemple et illustrés par les dessins annexés sur lesquels :

- la figure 1 représente, sous forme de schéma-bloc, un exemple de réalisation d'un calculateur d'avance à l'allumage ;

- la figure 2 représente un mode de réalisation détaillé du calculateur de la figure 1 incorporant un dispositif indicateur de consommation suivant un premier mode de réalisation de l'invention ;

- la figure 3 est une vue analogue à la figure 2 illustrant un deuxième mode de réalisation de l'invention ; et

- la figure 4 illustre sous forme schématique l'organisation d'une mémoire ROM du calculateur de la figure 3, déterminant les zones de consommation pour la mise en oeuvre du dispositif indicateur de consommation.

Les mêmes références numériques désignent les mêmes éléments sur les différentes figures.

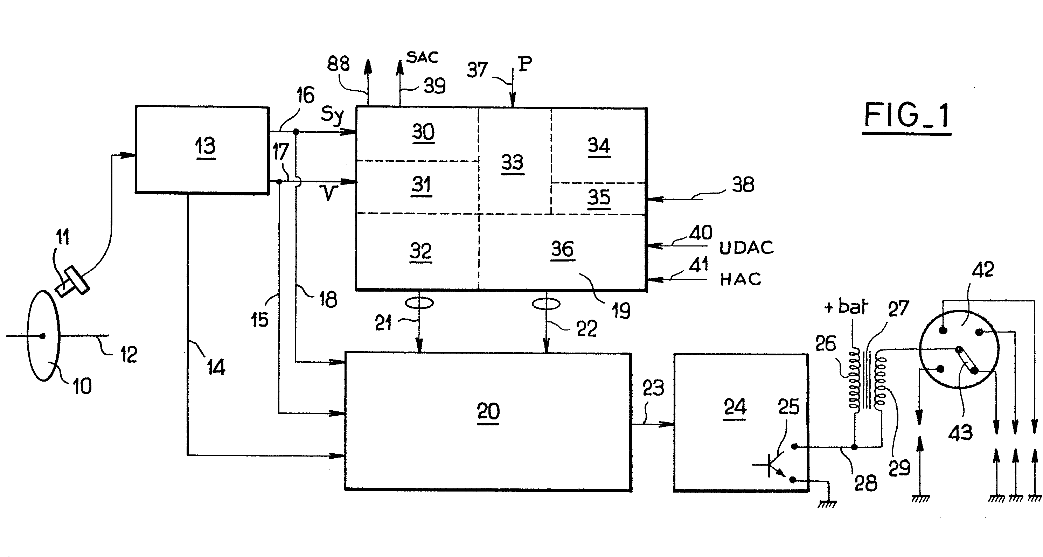

La figure 1 représente, sous forme de schéma-bloc, un exemple de réalisation d'un calculateur d'avance à l'allumage 19 qui reçoit, sur une entrée 16, un signal de synchronisation Sy et, sur une seconde entrée 17, un signal vitesse V, signaux qui sont obtenus à partir d'un étage de traitement 13 du signal prélevé par un capteur 11 de position détectant le passage des dents dont est munie à sa périphérie une cible 10 fixée sur le vilebrequin 12 du moteur à combustion interne et tournant en synchronisme avec lui. Le capteur 11 donne une image électrique permanente de la périphérie de la cible. Cet ensemble a été décrit dans la demande de brevet français 2 446 467.

Les parties essentielles du calculateur 19 sont les suivantes : un séquenceur 30 délivrant notamment une information d'envoi de correction SAC d'avance à l'allumage en fonction du cliquetis par un conducteur de sortie 39 ; un étage de mesure de la vitesse 31 ; une mémoire morte 32 ; un étage de mesure de pression 33 raccordé à un capteur de pression extérieur par un conducteur d'entrée 37 ; un étage de sécurité 34 pour se prémunir contre tout incident de fonctionnement du calculateur 19 ; un étage de corrections 35 relié au moins par un conducteur d'entrée 38 à au moins un capteur extérieur à fonction binaire et un étage 36 de calcul proprement dit de l'angle d'avance à l'allumage recevant des informations de correction de l'angle d'avance en fonction du cliquetis par une entrée 41 d'impulsions série HAC et une entrée 40 de signe de correction d'avance en fonction du cliquetis UDAC.

Le calculateur 19 délivre par ses sorties respectives 21 et 22 deux nombres binaires qui correspondent respectivement à l'angle de mise en conduction de la bobine 27 exprimé en nombre de dents de la cible 10 sur sa sortie 21 et à l'angle d'avance à l'allumage exprimé en nombre de dents de la cible 10 et en nombre de subdivisions d'entre deux dents de ladite cible sur sa sortie 22. Ces deux nombres binaires parviennent par les conducteurs 21 et 22 en entrée sur un bloc 20 de génération du signal de commande de la bobine 27 ; le bloc 20 reçoit aussi en entrée trois signaux par les conducteurs 14, 15, et 18 qui sont respectivement les dents de la cible 10 par 14, le signal de vitesse 15 qui est obtenu par les subdivisions d'entre deux dents de la cible 10 et le signal de synchronisation 18. Le bloc de génération 20 du signal de commande de la bobine fournit sur sa sortie 23 un signal de faible puissance qui est transmis à un étage de puissance amplificateur 24 dont la sortie 28 est reliée à la bobine d'allumage 27 ayant un enroulement primaire 26 et un enroulement secondaire 29 relié par une de ses extrémités à la partie centrale d'un distributeur 42 autour de laquelle tourne le bras mobile 43 qui met successivement en communication, au cours de sa rotation, le secondaire 29 de la bobine d'allumage 27 avec les bougies des différents cylindres du moteur pour provoquer l'explosion et la combustion du mélange contenu dans les cylindres. Ce dernier ensemble, comprenant le bloc 20 de génération du signal de commande de la bobine 27 et l'étage amplificateur de puissance 24, a été décrit dans la demande de brevet français 2 474 597.

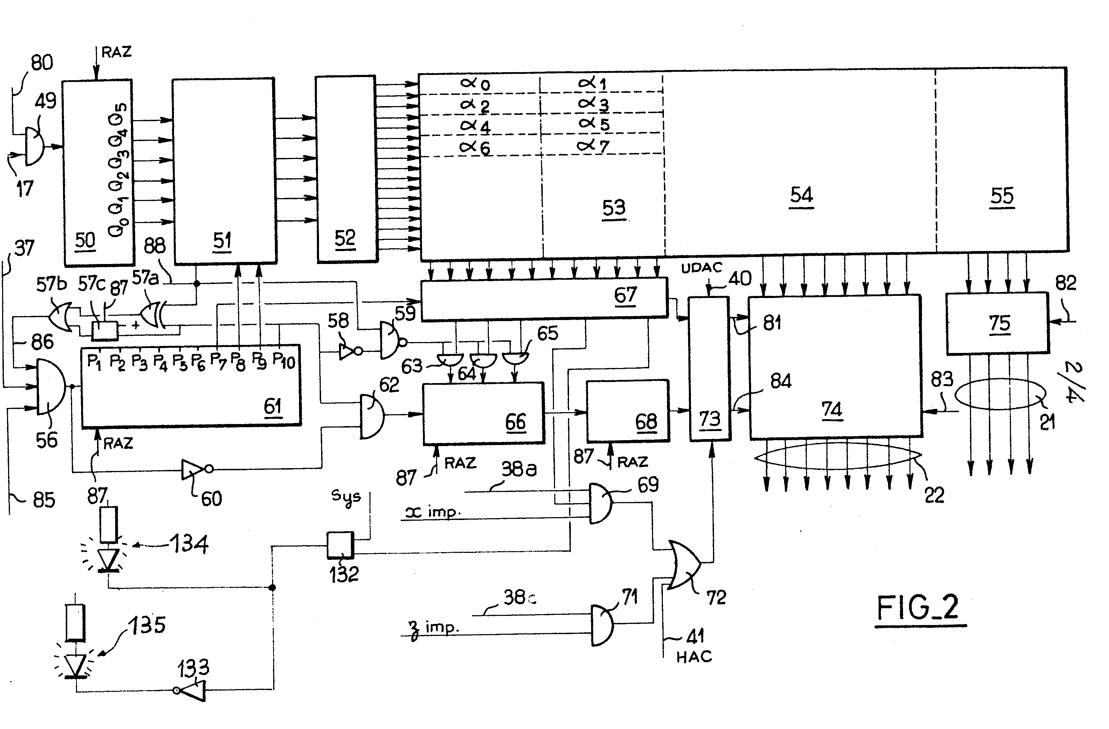

La figure 2 représente un mode de réalisation plus détaillé de l'étage de calcul proprement dit de l'angle d'avance à l'allumage désigné par la référence 19 à la figure 1 sans les éléments 30 et 34.

Cet étage de calcul comprend tout d'abord un compteur de vitesse 50 dans lequel on entre par l'intermédiaire d'une porte logique 49 à fonction ET connectée par une entrée au conducteur 17 transmettant le signal vitesse en provenance de l'étage de traitement 13 et recevant, par une seconde entrée 80, un créneau de mesure de vitesse sous la forme d'un signal de commande issu du séquenceur 30 de la figure 1 permettant une mesure pendant un temps déterminé par ledit séquenceur avec une valeur d'incrément de 100 tours/min. Le compteur 50 est, par exemple, un compteur à six chiffres binaires se verrouillant à sa valeur maximale dans le cas d'une mesure de vitesse supérieure à 6 300 tours/min. Le compteur de vitesse 50 est connecté par les sorties $Q_0$ à $Q_5$ aux entrées d'un codeur d'adressage 51 qui est connecté par ses sorties aux entrées d'un décodeur d'adresse 52.

La mémoire morte désignée par la référence 32 à la figure 1 comprend, dans la présente réalisation de la figure 2, trois parties essentielles à savoir : une première mémoire morte 53 renfermant les coefficients de correction d'avance proprement dits ; une seconde mémoire morte 54 d'avance pleine charge et une troisième mémoire morte 55 d'angle de conduction ou de temps de conduction. Ces trois mémoires mortes 53, 54 et 55 sont adressées soit directement pour les mémoires 54 et 55 par le compteur de vitesse 50 indiquant des vitesses entre zéro et 6 300 tours/min par l'intermédiaire du codeur d'adressage 51 et du décodeur d'adresse 52, soit indirectement pour la mémoire 53 par l'intermédiaire du codeur 51 faisant alors intervenir les quatre lignes de poids fort de la vitesse et deux chiffres pression. Les coefficients de correction d'avance dans la mémoire morte 53 sont codés sur trois chiffres binaires plus un chiffre binaire de signe pour la charge et deux chiffres binaires dont la fonction sera explicitée dans la suite de la description, chaque double groupe de six chiffres binaires ainsi défini pouvant être adressé et réparti différemment suivant les cas d'utilisation moteur en un groupe tous les 400 tours/min ou un groupe tous les 200 tours/min pour une zone nécessitant plus d'attention, ou un groupe tous les 800 tours/min pour une zone où la valeur d'avance présente moins de variations ou de discontinuité de pente.

La mémoire morte 54 représentant l'avance pleine charge est définie par huit chiffres binaires, le chiffre de plus faible poids valant un degré volant moteur et mémorisé en même temps que la valeur représentative du temps de conduction dans le compteur 74.

La troisième mémoire morte 55 dite de temps de conduction est connectée par ses sorties à une bascule à verrouillage 75 (Latch) mémorisant sur quatre chiffres binaires la valeur d'angle de conduction fournie par la mémoire 55 et transmise ultérieurement sur les sorties 21 au circuit 20 de la figure 1 générateur du signal de commande de la bobine 27.

La seconde mémoire morte 54 dite d'avance pleine charge est connectée par ses sorties à un compteur/décompteur 74 du calcul d'avance mémorisant sur huit chiffres binaires la valeur d'avance à l'allumage qui est transmise ultérieurement par ses sorties 22 au circuit 20 de la figure 1. Les sorties 21 de la bascule 75 et 22 du compteur 74 correspondent aux conducteurs 21 et 22 illustrés à la figure 1. Le compteur/décompteur 74 possède une première entrée 81 de comptage/décomptage ; une seconde entrée horloge 84 et une entrée de chargement 83. La bascule à verrouillage 75 possède une entrée de chargement 82.

L'étage de calcul suivant la présente invention comprend par ailleurs un compteur de pression 61 qui, dans le mode de réalisation illustré, est un compteur à dix chiffres binaires synchrones du signal fréquence correspondant à la pression régnant dans le collecteur d'admission du moteur à combustion interne. Ce signal de pression parvient au compteur 61, pendant le créneau de mesure de pression en provenance du séquenceur 30 de la figure 1 par un premier conducteur 85, par l'intermédiaire d'une porte logique 56 à fonction ET qui est connectée par une seconde entrée au second conducteur 37 de la figure 1 raccordé au capteur de mesure de la pression régnant dans le collecteur d'admission et par un troisième conducteur 86 à un ensemble de portes 57a, 57b, 57c transmettant un signal de limitation de capacité et de synchronisation. L'ensemble de portes comprend une première porte logique 57a à fonction OU EXCLUSIF connectée par une de ses entrées à une sortie du codeur d'adressage 51, par une seconde entrée à la sortie $P_{10}$ du compteur de pression 61 et par sa sortie à une entrée de la seconde porte logique 57b à fonction OU qui est connectée par sa sortie 86 à une entrée de la porte logique 56 à fonction ET rencontrée précédemment.

La seconde entrée de la porte logique 57b est connectée à la sortie $\overline{Q}$ d'une bascule 57c de type D dont l'entrée D est reliée au plus batterie dont l'entrée horloge est reliée à la sortie $P_{10}$ du compteur de pression 61 et dont l'entrée de remise à zéro est connectée à la remise à zéro 87 d'un multiplicateur de rythme binaire 66. Le compteur de pression 61 comporte dix sorties numérotées de $P_1$ à $P_{10}$. Les sorties $P_8$ et $P_9$ sont connectées en parallèle à des entrées du codeur d'adressage 51.

La sortie $P_{10}$, en plus de ses connexions à la porte logique 57a et à la bascule 57c, est connectée, d'une part, à une première entrée d'une porte logique 59 à fonction NON-ET par l'intermédiaire d'un inverseur 58, d'autre part, à une première entrée d'une porte logique 62 à fonction ET, cette dernière connectée par une seconde entrée à la sortie de la porte logique 56 à fonction ET déjà rencontrée par l'intermédiaire d'un inverseur 60 et, par ailleurs, par sa sortie à une entrée du multiplicateur de rythme binaire 66 déjà mentionné. La sortie $P_7$ du compteur de pression 61 est connectée à une entrée de déclenchement d'un étage 67 de choix de coefficient qui est connecté, par ailleurs, par sa série d'entrées supérieures aux sorties de la mémoire morte 53 dans laquelle sont emmagasinés les coefficients de correction d'avance par deux groupes de six chiffres binaires comme précédemment mentionné. Cet étage 67 de choix de coefficient est connecté par trois premières sorties en parallèle sur les premières entrées de trois portes logiques 63, 64, 65 à fonction ET connectées toutes les trois en parallèle par leur seconde entrée à la sortie de la porte logique 59 à fonction NON-ET et par leurs sorties en parallèle sur trois entrées du multiplicateur de rythme binaire 66 pour y introduire les trois chiffres binaires du coefficient de correction d'avance sélectionné dans la mémoire morte 53. La seconde entrée de la porte logique 59 à fonction NON-ET est connectée à une sortie du codeur d'adressage 51 et à une entrée de la porte logique 57a à fonction OU EXCLUSIF. La sortie latérale droite de l'étage 67 de choix du coefficient est reliée à l'entrée "SIGNE" d'un étage 73 permettant de déterminer le signe de la correction pression. Sur une seconde entrée, l'étage 73 est relié au conducteur 40 déjà mentionné à la figure 1 pour recevoir un signal UDAC, à savoir le signe de correction d'avance en fonction du cliquetis.

Revenant au multiplicateur de rythme binaire 66 portant sur trois chiffres binaires dans l'exemple représenté, la sortie de ce dernier est connectée à l'entrée d'un étage 68 diviseur par M qui, dans l'exemple représenté, est un diviseur par huit et dont la sortie est reliée à une seconde entrée de l'étage 73 ci-dessus mentionné. Cet étage 73 est connecté par sa troisième entrée située à sa partie inférieure à la sortie d'une porte logique 72 à fonction OU à trois entrées reliées respectivement pour les deux premières aux sorties respectives de deux portes logiques 69 et 71 à fonction ET et pour la troisième au conducteur 41 apparaissant déjà à la figure 1 et qui transmet des impulsions série de correction d'avance à l'allumage en fonction du cliquetis, impulsions engendrées par l'horloge anticliquetis de l'installation. Sur chacune des deux portes logiques 69 et 71 à fonction ET, le conducteur supérieur sert à véhiculer l'ordre de correction éventuel correspondant provenant de l'extérieur, le conducteur inférieur sert à recevoir respectivement $x$ impulsions pour la porte 69 et $z$ impulsions pour la porte 71 qui sont fournies par le séquenceur 30 de la figure 1 et le conducteur intermédiaire, dans le cas de la porte 69, est relié à une sortie de l'étage 67 de choix du coefficient. L'étage 73 permettant de déterminer " le type de correction pression-correction externe anticliquetis" est connecté par ses deux sorties 81 et 84 respectivement à l'entrée de comptage/décomptage et à l'entrée horloge du compteur du calcul d'avance 74 à huit chiffres binaires. Le compteur 74 et la bascule à verrouillage 75 ont des entrées de chargement numérotées respectivement 83 et 82 connectées au séquenceur 30 de la figure 1.

Le calculateur d'avance à l'allumage décrit jusqu'à présent en regard des figures 1 et 2 est identique à celui objet de la demande de brevet français 2 485 641, à ceci près qu'il ne comporte qu'une porte 69 d'entrée de correction conditionnelle au lieu de deux. La description détaillée de certains des circuits du calculateur et de son fonctionnement ne sera donc pas reprise et on pourra se reporter à cet effet à la demande de brevet précitée. On rappellera simplement que les corrections diverses provenant de la porte 72 sont commandées par des organes externes, à savoir un capteur de cliquetis en 38c et un indicateur d'état, tel qu'un thermocontact ou analogue, en 38a. Les valeurs de ces corrections sont fixées dans le séquenceur 30 par une porte laissant passer x ou z impulsions lorsque l'organe extérieur indique un état nécessitant une correction bien définie et, dans le cas de la porte 69, pour une condition supplémentaire pouvant être fonction de la charge du moteur ou de la vitesse ou bien des deux à la fois, ceci afin de mieux cerner les fonctionnements particuliers. Cette condition supplémentaire est elle-même programmée, au même titre que les coefficients de correction en fonction de la charge, par l'un des deux chiffres binaires disponibles du groupe de six chiffres binaires contenu à chaque adresse de la mémoire ROM 53.

Conformément à l'invention, l'autre chiffre binaire disponible est programmé pour commander, par l'intermédiaire de l'étage 67, une bascule D 132. Celle-ci maintient à sa sortie l'état binaire en provenance de l'étage ou aiguilleur 67 et de la mémoire morte 53 des coefficients de correction, et elle est synchronisée par une impulsion S ys intervenant respectivement

à un point mort haut et à un point mort bas du moteur. La sortie de la bascule D 132 est connectée, d'une part directement à un premier voyant 134, et d'autre part à un second voyant 135 par l'intermédiaire d'un inverseur 133. Les deux voyants 134 et 135 de couleurs différentes, par exemple rouge et vert, sont montés sur le tableau de bord du véhicule équipé du calculateur d'allumage de manière à être visibles par le conducteur et peuvent être constitués, par exemple, par des diodes électroluminescentes.

En fonctionnement, suivant l'état logique "0" ou "1" provenant de la mémoire 53, l'un ou l'autre seulement des deux voyants 134 et 135 est allumé en raison de la présence de l'inverseur 133. L'un de ces voyants indique une conduite économique, tandis que l'autre traduit une conduite non économique. Les composants 132-135 constituent ainsi, en combinaison avec le calculateur d'allumage, un dispositif indicateur de consommation en fonction de la vitesse et de la charge du moteur puisque les coefficients de correction d'avance de la mémoire 53 sont adressés à partir de mesures effectuées sur les paramètres "vitesse" et "pression".

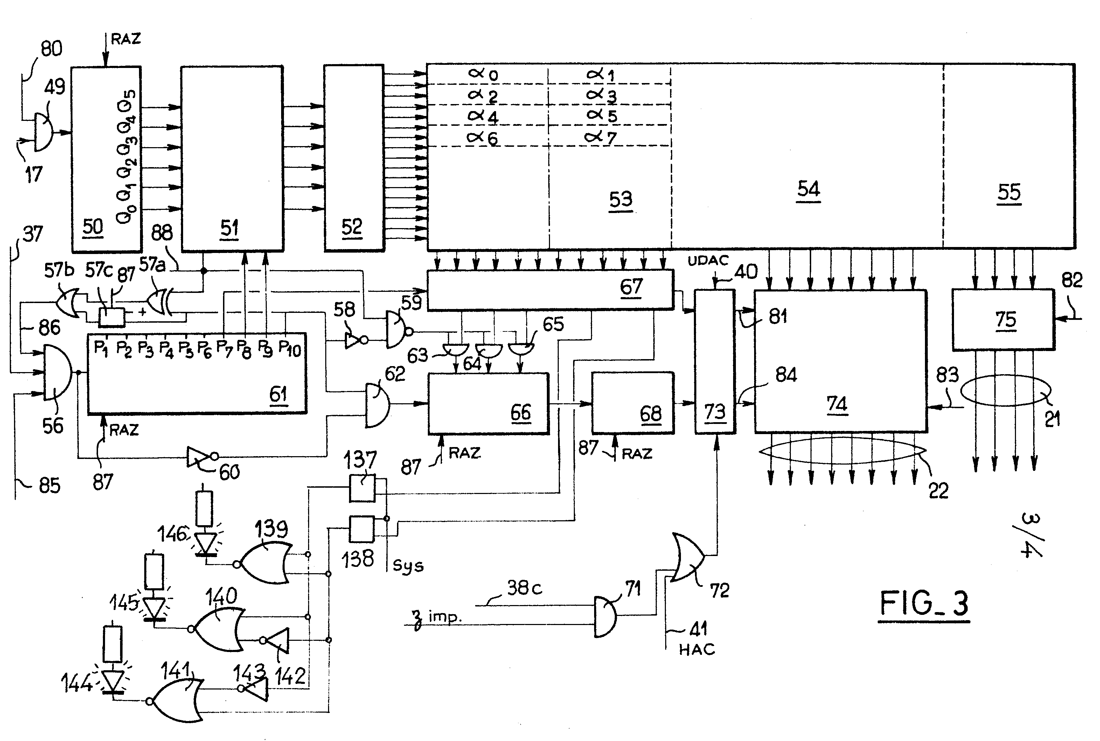

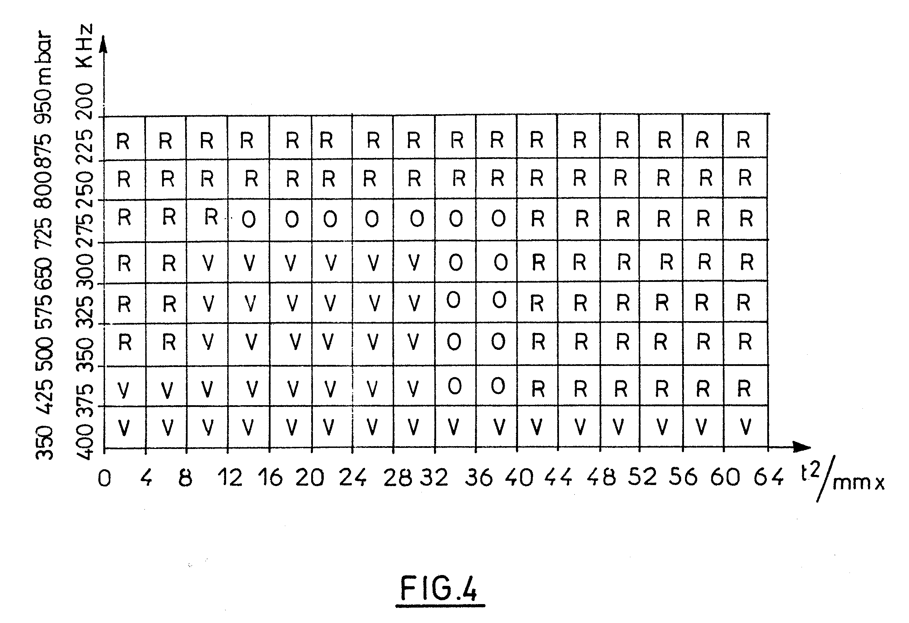

La figure 3 représente un deuxième mode de réalisation de l'invention qui se distingue de celui de la figure 2 par le fait que la correction conditionnelle transmise par la porte 69 a été supprimée de manière à réaliser un dispositif indicateur de consommation à trois voyants. A cet effet, les deux chiffres binaires disponibles de chaque groupe de six chiffres de la mémoire ROM 53 sont programmés pour réaliser la fonction économétrique comme représenté sur la table de la figure 4 dans laquelle les lettres "R", "0" et "V" symbolisent le codage numérique à deux chiffres binaires servant à commander, en fonction de la vitesse et de la pression mesurées, des voyants verts pour une conduite économique, orange pour une conduite moins ou moyennement économique et rouge pour une conduite peu économique.

Ces deux chiffres binaires programmés de la mémoire 53 sont appliqués, par l'intermédiaire de l'aiguilleur 67, respectivement à deux bascules 137 et 138 qui maintiennent à leur sortie l'état correspondant "0" ou "1" et sont synchronisées par le signal de synchronisation Sys. Les deux sorties des bascules 137 et 138 attaquent chacune trois voyants 146, 145 et 144 par l'intermédiaire de portes NOR 139, 140 et 141 respectivement. Les entrées de la porte NOR 139 sont reliées directement aux sorties des bascules D 137 et 138. L'une des entrées de la porte NOR 140 est reliée directement à la sortie de la bascule D 137, tandis que son autre entrée est reliée à la sortie de la bascule D 138 par un inverseur 142. Enfin, l'une des entrées de la porte NOR 141 est reliée directement à la sortie de la bascule D 138 et son autre entrée est reliée à la sortie de la bascule D 137 par un inverseur 143.

En fonctionnement, si deux "0" sont appliqués aux bascules D 137 et 138, seul le voyant 146 est allumé. Si un "0" est appliqué à la bascule 137 et un "1" à la bascule 138, seul le voyant 145 est allumé. Enfin, si la bascule 137 reçoit un "1" et la bascule 138 un "0", seul le voyant 144 est allumé.

Bien entendu, l'invention n'est pas limitée aux deux seuls modes de réalisation décrits. C'est ainsi, par exemple, que dans le cas où un seul chiffre binaire est utilisé pour programmer le dispositif indicateur de consommation, un seul voyant pourrait être utilisé, qui serait allumé ou éteint suivant la valeur prise par ce chiffre binaire. D'autre part, les voyants pourraient être remplacés par des organes avertisseurs sonores, par exemple un dispositif synthétiseur de parole, ou bien encore le dispositif pourrait combiner des organes avertisseurs sonores et lumineux.

En outre, si deux chiffres binaires au maximum sont disponibles pour programmer le dispositif indicateur de consommation dans le cas du calculateur d'allumage décrit ci-dessus, ce nombre peut-être supérieur dans d'autres applications et ne dépend que de la capacité de la mémoire morte de coefficients.

Naturellement, le dispositif indicateur de consommation peut aussi

0090740

bien être associé à un calculateur d'injection ayant une mémoire morte de coefficients de calcul de temps d'injection adressée en fonction du régime et de la charge du moteur, ou à un calculateur assurant à la fois le calcul de l'angle d'avance à l'allumage et celui du temps d'injection. Un tel calculateur est notamment décrit dans la demande de brevet français 82-13996.

REVENDICATIONS.

1. Calculateur d'avance à l'allumage et/ou d'injection de carburant pour moteur à combustion interne de véhicule automobile, du type comportant des moyens (49, 50) de mesure de la vitesse du moteur, des moyens (56, 57, 61) de mesure de sa charge, au moins une mémoire morte (53) de coefficient d'avance et/ou de temps d'injection adressable en fonction de la vitesse et de la charge, des moyens d'adressage de la mémoire morte (53) à partir des moyens de mesure (49, 50, 56, 57, 61) et des moyens (62, 74) de calcul de l'avance à l'allumage et/ou du temps d'injection à partir des coefficients lus dans la mémoire morte (53), caractérisé en ce qu'il comprend au moins un organe (134, 135, 144 - 146) avertisseur du mode instantané de fonctionnement du moteur et un circuit logique (132, 133; 137 - 143) d'excitation de l'organe avertisseur commandé, à partir de la mémoire morte (53), par au moins un chiffre binaire représentatif du caractère économique ou non économique du fonctionnement emmagasiné à chaque emplacement contenant un coefficient de la mémoire morte (53).

2. Calculateur suivant la revendication 1, caractérisé en ce qu'il comprend deux organes avertisseurs (134, 135) excités selectivement par le circuit logique (132, 133) en fonction de la valeur du chiffre binaire appliquée à ce dernier.

3. Calculateur suivant la revendication 2, caractérisé en ce que le circuit logique comprend une bascule (132) dont la sortie est connectée directement à l'un (134) des organes avertisseurs et par l'intermédiaire d'un inverseur (133) à l'autre organe avertisseur (135).

4. Calculateur suivant la revendication 1, caractérisé en ce qu'il comprend trois organes avertisseurs (144 - 146) excités sélectivement par le circuit logique (137 - 143) en fonction de la valeur de chacun de deux chiffres binaires emmagasinés à chaque emplacement contenant un coefficient de la mémoire morte (53).

5. Calculateur suivant la revendication 4, caractérisé en ce que le circuit logique comprend deux bascules (137, 138) recevant chacune l'un desdits chiffres binaires de la mémoire morte (53) à leur entrée et dont les sorties sont connectées aux trois organes avertisseurs (144, 146) par l'intermédiaire de trois portes NOR (141, 139) respectivement, l'une des portes NOR (139) étant reliée directement aux bascules (137, 138), une autre des portes NOR (140) étant reliée directement à une première (137) des bascules et par l'intermédiaire d'un inverseur (142) à la seconde bascule (138), et la troisième porte NOR (141) étant reliée directement à la seconde bascule (138) et par l'intermédiaire d'un inverseur (143) à la première bascule.

6. Calculateur suivant l'une quelconque des revendications 3 et 5, caractérisé en ce que chaque bascule (132; 137-138) est une bascule D qui reçoit sur l'une de ses entrée le chiffre binaire et sur son autre entrée un signal de synchronisation (Sys) de point mort haut et de point mort bas du moteur.

7. Calculateur suivant l'une quelconque des revendications 1 à 6, caractérisé en ce que chaque organe avertisseur (134, 135; 144-146) est un voyant lumineux.

8. Calculateur suivant l'une quelconque des revendications 1 à 6, caractérisé en ce que chaque organe avertisseur est du type sonore.

9. Calculateur suivant l'une quelconque des revendications 1 à 8 comprenant, pour le calcul de l'angle d'avance à l'allumage, une première mémoire morte (53) de coefficients de correction d'avance et une seconde mémoire morte (54) de valeurs d'avance pleine charge, caractérisé en ce que le ou lesdits chiffres binaires sont emmagasinés à chaque emplacement contenant un coefficient de correction d'avance de la première mémoire morte (53).

FIG_1

FIG_2

FIG_3

3/4

0090740

FIG.4

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-4 322 800  (TAKASHI HISEGAWA et al.) (30-03-1982) * En entier * | 1-7,9 | F 02 P    5/04 B 60 Q    9/00 |
| Y | --- FR-A-2 487 753  (AMAURY) * En entier * | 1-7,9 | |
| A | --- US-A-4 181 944  (T. YAMAUCHI et al.) * En entier * | 1 | |
| A | --- FR-A-2 468 955  (NISSAN) * En entier * ----- | 8 | |

| DOMAINES TECHNIQUES RECHERCHES (Int. Cl. 3) |
|---|
| F 02 P B 60 Q |

Le présent rapport de recherche a été établi pour toutes les revendications

| Lieu de la recherche LA HAYE | Date d'achèvement de la recherche 11-07-1983 | Examinateur GODIN CH.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82